# EUROPEAN PATENT APPLICATION

(11) **EP 2 624 426 A1**
(43) Date of publication of application: **07.08.2013**
(21) Application number: 12153920.9
(22) Date of filing: 03.02.2012
(51) Int. Cl.: H02M 3/158, H02M 1/32, H02M 3/155

(54) **Protection of an N-channel transistor**

(71) Applicant: Dialog Semiconductor GmbH, 73230 Kirchheim (DE)
(72) Inventor: Knoedgen, Horst, 82110 Germering (DE)
(74) Representative: MERH-IP Matias Erny Reichl Hoffmann

(57) **Abstract**

A scheme for operating a low side switch (notably an N-channel transistor) of a power converter in the safe operation area. A power converter (400) configured to convert an input voltage (Vdd, 101) at an input of the power converter (400) into an output voltage (107) at an output of the power converter (400) is described. The power converter (400) comprises a low side switch (403) configured to couple an inductor (104) to ground during an on-state of the low side switch (403) and a protection switch (401) in parallel to the low side switch (403), configured to reduce a voltage drop across the low side switch (403) during at least part of a switch off time of the low side switch (403).

## Description

### Technical Field

The present document relates to power converters. In particular, the present document relates to a scheme for operating a low side switch (notably an N-channel transistor) of a power converter in the safe operation area.

### Background

Switched-mode power supplies are commonly used to convert an input voltage (provided e.g. by a battery of an electronic device) into an output voltage (provided e.g. to a processor of the electronic device). An example for a step-down DC-to-DC converter (providing a lower output voltage from a higher input voltage) is e.g. a so-called buck converter. Such buck converters may comprise N-channel transistors as low side transistors. These N-channel transistors can be destroyed by exceeding the save operation area, when being switched off under load.

The present document addresses the above mentioned shortcomings of switched-mode power converters. In particular, the present document describes a scheme for protecting the low side switch of a buck converter.

### Summary

According to an aspect a power converter, e.g. a DC-to-DC power converter, configured to convert an input voltage at an input of the power converter into an output voltage at an output of the power converter. The power converter may be a switched-mode power converter. In particular, the power converter may be a step-down DC-to-DC converter such as a buck converter. Alternatively, the power converter may be a step-up DC-to-DC converter such as a boost converter. The power converter may comprise a high side switch connectable in series to an inductor (which may be external to an integrated circuit comprising the power converter). The inductor may have the function of storing energy to be provided to a load at the output of the power converter. The high side switch may be configured to couple the inductor (if connected to the high side switch) to the input voltage or to the output voltage during an on-state of the high side switch. If the power converter is a step-down converter (e.g. a buck converter), the high side switch may be configured to couple the inductor to the input voltage. If the power converter is a step-up converter (e.g. a boost converter), the high side switch may be configured to couple the inductor to the output voltage.

It should be noted that the high side switch may comprise or may be implemented as a diode. In particular, the high side switch may comprise a body diode (as is the case e.g. for a MOS transistor). Alternatively, the high side switch may be implemented as a diode (e.g. if the power converter is a step-up converter such as a boost converter). In general terms, it may be stated that the power converter may comprise a high side switch or a diode connectable in series to the inductor, wherein the high side switch or the diode may be configured to couple the inductor to the input voltage or to the output voltage, during an on-state of the high side switch, or when the diode is forward biased.

In the present document, the term "couple" or "coupled" refers to elements being in electrical communication with each other, whether directly connected e.g., via wires, or in some other manner.

The power converter may be a multi-phase power converter. This may be beneficial to provide a power converter for increased load requirements. Such a multi-phase power converter may comprise a plurality of power converters (comprising e.g. a high side switch and a low side switch, each) in parallel. The plurality of power converters may share a common commutation cycle rate, wherein the switching instants of the respective (high side) switches may be offset with respect to one another.

The power converter comprises a low side switch configured to couple the inductor to ground during an on-state of the low side switch. Typically, the low side switch and the high side switch are controlled such that when the high side switch is in the on-state, the low side switch is in the off-state, and vice versa.

In addition, the power converter comprises a protection switch in parallel to the low side switch, and configured to reduce a voltage drop across the low side switch during at least part of a switch off time of the low side switch. The switch off time of the low side switch may be the time interval required by the low side switch to reduce the current through the low side switch from 100% (when the low side switch is in the on-state) to a pre-determined off threshold (of e.g. 10%, 20%, 30%, 40% or 50%).

The low side switch may be an N-channel transistor (i.e. an NMOS transistor). The protection switch may be a P-channel transistor (i.e. a PMOS transistor) or a PNP transistor. The high side switch may be a P-channel transistor.

The power converter may further comprise a control unit configured to control switching times of the high side switch, the low side switch and/or the protection switch. The control unit may be configured to switch off the low side switch at a first time instant, and switch off the protection switch at a subsequent second time instant. The time interval between the first and second time instants may correspond to at least part of the switch off time of the low side switch. In particular, the time interval between the first and second time instants may be 50% or more, 60% or more, 70% or more, 80% or more, 90% or more, 100% or more of the switch off time of the low side switch.

The control unit may be configured to switch on the high side switch at a third time instant subsequent to the second time instant. Furthermore, the control unit may be configured to switch on the protection switch subsequent to switching off the high side switch and not later than switching on the low side switch. The latter case may be beneficial in situations where the low side switch is submitted to an overload. In such cases, the protection switch may support the low side switch to drive the required current. This can be particularly helpful for a step-up converter (such as a boost converter).

Typically, the control unit is configured to repeatedly switch between the on- and off-states of the high side switch, the low side switch and/or the protection switch in accordance to a commutation cycle rate of the power converter. The commutation cycle rate may be the time interval between the (beginning of) two subsequent periodic on-states of the high side switch.

The control unit may be configured to control the high side switch, the low side switch and/or the protection switch such that when the high side switch is in the on-state, the protection switch and the low side switch are in the off-state; and/or when the low side switch is in the on-state, the high side switch is in the off-state.

The power converter may further comprise current sensing means configured to sense a current through the low side switch. The current sensing means may be implemented using a current mirror. The part of the switch off time of the low side switch during which the protection switch reduces the voltage drop across the low side switch may be determined based on the sensed current. In particular, the control unit may be configured to determine the time interval between the first and second time instants based on the sensed current. In other words, the control unit may be configured to determine the switch-off time of the protection switch based on the sensed current. The time interval between the first and second time instants may be reduced if the sensed current reduces (and vice versa). As such, the low side switch may be operated in the safe operation area, while reducing the losses caused by the protection switch.

It should be noted that the methods and systems including its preferred embodiments as outlined in the present document may be used stand-alone or in combination with the other systems disclosed in this document. Furthermore, all aspects of the systems outlined in the present document may be arbitrarily combined. In particular, the features of the claims may be combined with one another in an arbitrary manner.

### Short description of the Figures

The invention is explained below in an exemplary manner with reference to the accompanying drawings, wherein
Fig. 1 illustrates a block diagram of an example buck converter;
Fig. 2 illustrates a switching diagram for an example buck converter;
Fig. 3 shows example currents and voltages at the low side switch of an example buck converter;
Fig. 4 illustrates an example buck converter comprising a protection switch;
Fig. 5 illustrates an example timing diagram for switching the low side switch of a buck converter from on-state to off-state;
Figs. 6 and 7 illustrate further example buck converters with example control circuits; and
Fig. 8 illustrates the example buck converter of Figs. 4 comprising MOS transistors with body diodes.

### Detailed Description

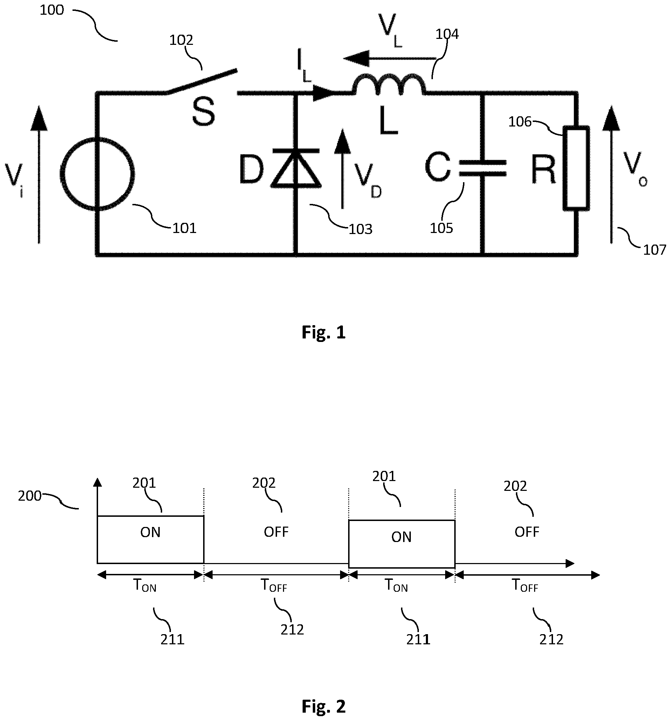

Fig. 1 illustrates an example buck converter 100. Buck converters 100 may be provided in electronic devices e.g. to convert a battery voltage Vᵢ 101 into the supply voltage V₀ 107 of the load 106. A typical buck converter 100 comprises two switches 102, 103 (e. g. a transistor 102 and a diode 103), as well as an inductor 104 and a capacitor 105. The two switches 102, 103 control the current through the inductor 104 and thereby provide for a voltage modification (step-down conversion) from the input voltage Vᵢ 101 (e.g. a battery voltage) down to the voltage V₀ 107 at the load 106. A buck converter 100 may be operated in a so-called continuous mode, where the current through the inductor 104 never falls to zero. Alternatively, the buck converter 100 may be operated in a so-called discontinuous mode for which the current through the inductor may fall to zero during parts of the commutation cycles performed by the two switches 102, 103.

The buck converter 100 is typically operated in two states forming an overall commutation cycle. In a first state the switch 102, referred to as the high side switch 102, is closed (on-state), whereas the second switch 103, referred to as the low side switch 103, is open (or whereas the diode 103 is reverse-biased). During this first state (referred to as the on-state of the buck converter 100) the voltage across the inductor 104 is given by the difference of the input voltage Vᵢ 101 and the load voltage V₀ 107. During this first stage the energy stored in the inductor 104 increases as the current through the inductor 104 increases. In a second state (referred to as the off-state of the buck converter 100) the first switch 102 is opened and the second switch 103 is closed (or the diode 103 is forward-biased). If the voltage drop across the second switch 103 (or the diode 103) can be neglected, the voltage across the inductor 104 is the negative voltage V₀ 107 across the load 106. During the off-state of the buck converter 100, the energy stored within the inductor 104 is released towards the load 107 via a decreasing current through the inductor 104.

In order to provide a voltage conversion of the input voltage Vᵢ 101 to the load voltage V₀ 107, the buck converter 100 is commutating between the on-state and the off-state in a repetitive manner. This is illustrated in Fig. 2, where a switching diagram 200 is illustrated. It can be seen that the buck converter 100 commutates between the on-state 201 and the off-state 202 in a periodic manner. By appropriately setting the duration 211 of the on-state and the duration 212 of the off-state, the ratio between the load voltage V₀ 107 and the input voltage Vᵢ 101 can be tuned. The ratio between the duration 211 of the on-state and the duration of a commutation cycle (i.e. the sum of duration 211 and duration 212) is typically referred to as the duty cycle of the buck converter 100.

During the on-state of the buck converter 100, the high side switch 102 is in the on-state and the low side switch 103 is in the off-state. During the off-state of the buck converter 100, the high side switch 102 is in the off-state and the low side switch 103 is in the on-state.

The performance of the buck converter 100 depends on the characteristics of the different components of the buck converter 100. As such, the output capacitor 105 should have enough capacitance to supply sufficient power to the load 106 without any noticeable variations of the load voltage V₀ 107 during the different commutation states 201, 202. In other words, the capacitor 105 should be appropriable selected to reduce output voltage ripples. Furthermore, the voltage drop across the diode 103, when forward-biased, or the voltage drop across the transistor 103, when closed, should be as low as possible (preferably zero). Due to this reason the low side switch 103 is typically implemented as an N-channel transistor, when implementing the buck converter 100 using a metal oxide-semiconductor (MOS) structure. In other words, the low side switch 103 may be implemented as a NMOS transistor. This is advantageous due to the fact that N-channel transistors typically have a lower on-resistance Rₒₙ compared to P-channel transistors. A typical value for the Rₒₙ of an NMOS transistor is in the range of 100mΩ whereas the Rₒₙ of a PMOS transistor is in the range of 1Ω. Consequently, the losses of a buck converter can be reduced by using a NMOS low side transistor 403.

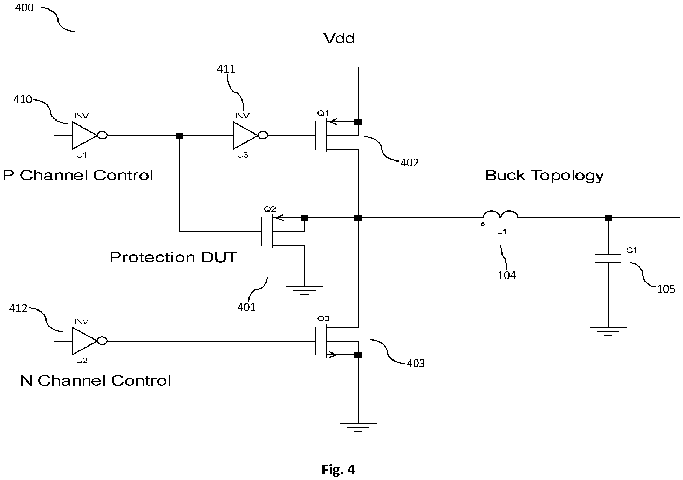

Fig. 4 illustrates the block diagram of an example buck converter 400 implemented using MOS transistors. The high side switch 102 is implemented as a P-channel transistor (i.e. a PMOS transistor) 402. The low side switch 103 is implemented as an N-channel transistor 403. Furthermore, the buck converter 400 comprises an inductor L1 104 and a capacitor C1 105. In addition, Fig. 4 shows example control and driver units for the high side transistor 402 and the low side transistor 403. These control and driver units may comprise inversion units 410, 411 and 412. The inversion units 410, 411 and 412 may also be used as timing elements for controlling the switching instants of the transistors, 401, 402, 403. As such, a delay caused by the inversion units 410, 411, 412 may be adjusted in order to control the switching instants of the transistors, 401, 402, 403.

While an NMOS transistor 403 has the advantage of having a low on resistance Rₒₙ, NMOS transistors are typically disadvantageous in that they have a restricted safe operation area. In other words, N-channel transistors are typically more sensitive than P-channel or PNP transistors. The safe operation areas of transistors typically depend on a maximum power which can be taken up by the transistor prior to being destroyed. The power absorbed at the NMOS transistor may be defined as the product given by the voltage across the transistor and the current running through the transistor. The buck converter 400 should be designed such that the switches 402, 403 (and in particular the NMOS transistor 403) are always operated within their safe operation area, notably when being switched from an off-state to an on-state and/or vice versa.

The demands on the low side switch 103, 403 of the buck converter 100, 400 are particularly challenging in situations where the low side switch 103, 403 is switched off under load. Such situations may occur when the buck converter 100, 400 has to discharge the capacitor 105, while the low side switch 103, 403 is switched to its off-state. In this context, it should be noted that the load connected to a buck converter 100, 400 may vary significantly. For example, the processors of modem electronic devices are frequently put into a sleep mode and are only activated when required, in view of a more efficient energy management. This may lead to situations, where the load currents requested by the processor vary from a low value (e.g. in the range of 100mA) during sleep mode to a high value (e.g. up to 20A) when being activate, and vice versa. As such, the currents through the low side switch 103, 403 may be significant, if the buck converter is under load (e.g. when the processor connected to the buck converter is activated). The current through the low side switch 103, 403 may be further increased if the load changes (e.g. if the processor is switched off), as this may lead to a discharge of the capacitor 105, thereby providing an additional current through the low side switch 103, 403. In particular, if the load (e.g. the processor) is switched off, the charge in the capacitor 105 has to be discharged via the low side switch 103, 403. This means that the low side switch 103, 403 has to be switched off under current, thereby increasing the risk of operating the low side switch 103, 403 outside the safe operation area.

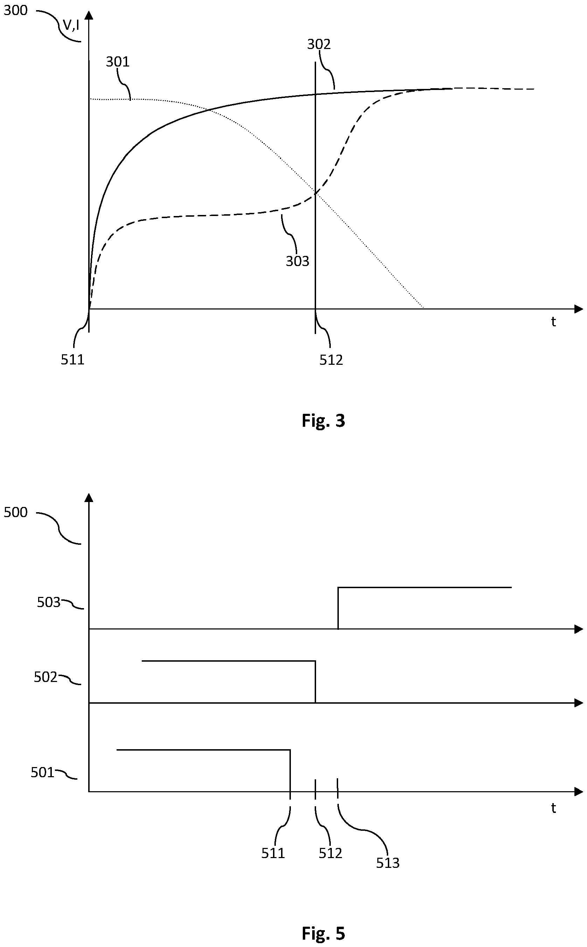

Consequently, the current through the low side switch 103, 403 may be significant when switching off the low side switch 103, 403. Typically, the coil (i.e. the inductor 104) is significantly faster than the switch off time of the transistor 103, 403. This leads to an almost instant voltage drop across the low side switch 103, 403 when switching off the low side switch 103, 403, in combination with a high current through the low side switch 103, 403 (due to the relatively slow switch off time of the low side switch 103, 403). Hence, there is a risk that the low side switch 103, 403 no longer operates in the save operating area, as it is concurrently submitted to a high voltage and a high current. This is illustrated in the diagram 300 of Fig. 3. It can be seen that the current 301 through the low side switch 103, 403 reduces at a slower rate than the increase of the voltage 302 across the low side switch 103, 403. This is due to the relatively slow switch off time (in the range of 1-2ns for low voltage switches, and possibly higher for higher voltage switches) of the low side switch 103, 403 compared to the reaction time of the inductor 104.

As a result of the concurrent high voltage 302 and high current 301, an NMOS based low side switch 403 may leave the save operation area and may be destroyed. A possible way of protecting the low side switch 403 could be the use of a snapper capacitor in parallel to the low side switch 403. When switching off the low side switch 403, the snapper capacitor absorbs a part of the current through the low side switch 403, thereby reducing the current 301 through the low side switch 403 and thereby protecting the low side switch 403. The use of a snapper capacitor is, however, disadvantageous in that the capacitor requires the use of an additional external component (external to the integrated circuit of the buck converter 100, 400). Furthermore, the snapper capacitor typically leaks current during normal operation of the buck converter, thereby reducing the efficiency of the buck converter.

In the present document it is proposed to use a pass switch 401 in parallel to the low side switch 403 in order to ensure that the low side switch 403 stays within the save operating area. The pass switch 401 (also referred to as the protection switch 401) may be implemented as a more robust P-channel transistor (or as a PNP transistor). The protection switch 401 is configured to take over (parts of) the current of the inductor 104, until the low side switch 403 is switched off.

At the same time, the voltage drop across the low side switch 403 is limited (e.g. to 2 V) due to the limited Rₒₙ of the protection switch 401. Consequently, the low side switch 403 can be operated in the save operation area, even when the low side switch 403 is switched off under load. Once the low side switch 403 is completely switched off (i.e. subsequent to the expiration of the switch off time), the protection switch 401 (which acts as a source follower) may give the coil (i.e. the inductor 104) free. The switching times (or the rise times) of the protection switch 401, with respect to the switching times of the low side switch 403 and the high side switch 402, may be appropriately controlled in order to avoid ringing.

The sequence of the switching times of the low side switch 403, the protection switch 401 and the high side switch 402 is illustrated schematically in the timing diagram 500 in Fig. 5. At time instant 511, the low side switch 403 is switched from the on-state to the off-state (timing diagram 501). Subsequently, at time instant 512, the protection switch 401 is switched from the on-state to the off-state (timing diagram 502). The time interval between time instants 511 and 512 can be selected based on the switch off time of the low side switch 403. By way of example, the time interval between time instants 511 and 512 may be set as a fraction of the switch off time of the low side switch 403 (e.g. equal to the switch off time of the low side switch 403).

As such, it can be ensured that during switch off, the low side switch 403 is not facing concurrently a high voltage 302 (e.g. the output voltage 107) and a high current 301. In particular, the voltage across the low side switch 403 may be limited to the limited voltage drop across the protection switch 401 (which remains in on-state at the switch-off time instant 511 of the low side switch 403). Furthermore, the current 301 through the low side switch 403 may be reduced due to the parallel protection switch 401. Hence, it can be ensured that the low side switch 403 stays within the safe operation area. This is illustrated in Fig. 3, where the switch off time instant 511 of the low side switch 403 and the switch off time instant 512 of the protection switch 401 are illustrated. It can be seen that in the time interval between time instants 511 and 512, i.e. during the switch-off time of the low side switch 403, the voltage 303 across the low side switch 403 can be reduced, compared to a situation (voltage 302) without protection switch 401.

Returning to Fig. 5, it can be seen that subsequent to switching off the protection switch 401 at time instant 512, the high side switch 402 may be switched on (at time instant 513 of timing diagram 503). The sequence of switching time instants illustrated in Fig. 5 is typically repeated within each commutation cycle of the buck converter 400.

Overall, the protection switch 401 (e.g. a P-channel transistor) acts as a source follower. When the low side switch 403 (typically an N-channel transistor) switches off under load (at time instant 511), the node (i.e. the output voltage at the protection switch 401) will ramp to the threshold voltage Vt of the protection switch 401. This may automatically lead to the protection switch 401 being in the on-state (without the need to explicitly switch the protection switch 401 into the on-state). Hence, the protection switch 401 can take over the current at the low side switch 403 to ground. The requirements with regards to the Rₒₙ of the protection switch 401 can be more relaxed than the Rₒₙ requirements for the low side switch 403. The Rₒₙ of the protection switch 401 should be selected to ensure that the voltage drop 303 across the protection switch 403 (within the time interval between time instants 511 and 512) is sufficiently small to ensure that the low side switch 403 is operated in the safe operation area (e.g. around 2 Volt to ground).

The switching off of the protection switch 401 can be synchronized with the high side switch 402, i.e. the switch off time 512 of the protection switch 401 can be synchronized with the switch on time 513 of the high side switch 402, with a short delay of time instant 513 with regards to time instant 512. By controlling the rise time 512 of the gate of the protection switch 401, ringing can be avoided. If the protection switch 401 is active and takes over current, the power dissipation within the protection switch 401 may be quite high. Consequently, there may be a compromise between the delay for switching off the protection switch 401 (i.e. the delay of time instant 512 with regards to time instant 511) and protection. In general, the overall time interval between the time instant 511 for switching off the low side switch 402 and the time instant 513 for switching on the high side switch 402 is in a range of ns (1 to 10ns) in a low voltage application.

A power converter 400 typically comprises a timing generator (analogue or digital) which may be used to control the switches 401, 402, 403 comprised within the power converter 400. The inverters (i.e. the timing elements) 410, 411, 412 of Fig. 4 may be adjusted to the specific technology requirements of the power converter 400. As such, a power converter 400 may comprise a control unit (comprising e.g. a timing generator and one or more inverters / timing elements) in order to adjust the commutation cycle rate (i.e. the frequency) of the power converter 400 and/or the switching instants 511, 512, 513 of the switches 401, 402, 403 comprised within the power converter 400. The switching instants 511, 512, 513 may be adjusted by adjusting a delay caused by the inverters (or timing elements) 410, 411, 412.

The overall timing of the power converter 400 may be adjusted using an exchangeable and/or programmable storage medium, such as an EPROM (Erasable Programmable Read-Only Memory), an EPROM OTP (One Time Programmable) or an EEPROM (Electrically Erasable Programmable Read-Only Memory). As such, the power converter 400 may be adapted to a particular application. In particular, the switching instants (and consequently the losses incurred by the power converter) may be adapted to the particular application (load requirements). The use of an exchangeable and/or programmable storage medium would also allow for the adjustment of the switching frequency (i.e. the commutation cycle rate) to the particular application.

The low side switch 403 may be provided with current sensing means for sensing the current through the low side switch 403. In other words, the power converter 400 may comprise current sensing means for sensing the current through the low side switch 403. The current sensing means may e.g. be implemented as a current mirror. The sensed current through the low side switch 403 may be used to adjust the timing "on the fly". In other words, the sensed current through the low side switch 403 may be used to adjust the time instants 511, 512, 513. In particular, the time instant 512 may be determined based on the sensed current through the low side switch 403. Hence, the losses incurred by the protection switch 401 may be minimized in accordance to the current flowing through the low side switch 403.

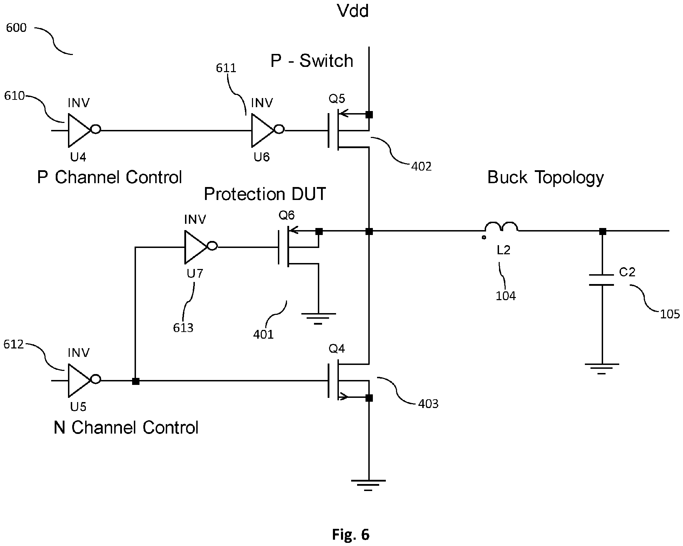

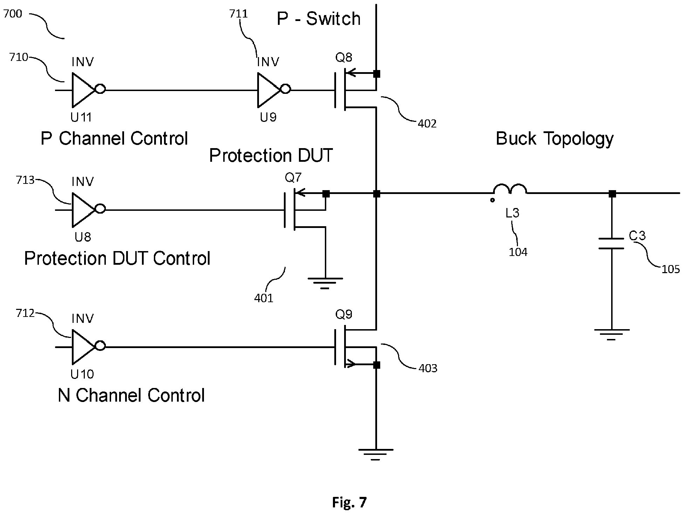

Fig. 6 and 7 illustrate further example power converters 600, 700 comprising alternative example control units for controlling the switching time instants of the transistors 401, 402, 403. Fig. 6 illustrates an example power converter 600 for which the control signal of the protection switch 401 is derived from the control signal of the low side switch 403 using an inverter 613 (i.e. derived in dependency of the control signal of the low side switch 403). Furthermore, the inverters 510, 511, 512 are used for controlling the high side switch 402 and the low side switch 403. Fig. 7 illustrates an example power converter 700 for which the control signal of the protection switch 401 is generated independently from the control signals of the low side switch 403 and of the high side switch 402. For this purpose, the control unit of the power converter 700 comprises the inverters 710, 711, 712, 713.

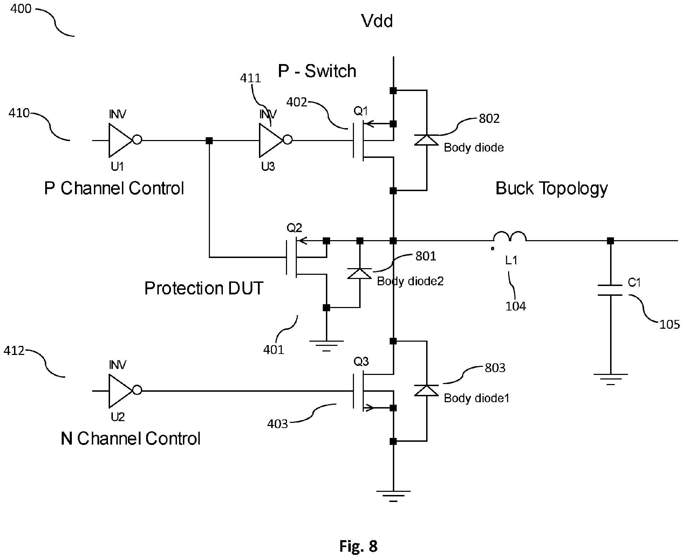

As indicated above, the high side switch 402, the low side switch 403 and the protection switch 401 may be implemented as MOS transistors (notably MOS field effect transistors). A MOS transistor (e.g. a PMOS or an NMOS transistor) typically comprises a body diode between the drain (cathode) and the source (anode) of the MOS transistor. As a consequence of such body diodes, the MOS transistors 401, 402, 403 are able to block current in only one direction. In the context of a power converter, this means that even though a switch is in the off-state, a current may flow across the body diode of the switch. By way of example, prior to switching on the high side switch 402 and subsequent to switching off the protection switch 401 (i.e. between time instants 512 and 513), a current may flow across the body diode of the high side switch 402. The body diodes 801, 802, 803 of the protection switch 401, the high side switch 402, and the low side switch 403, respectively, are shown in Fig. 8.

In the present document a system for protecting the low side switch of a switched mode power converter have been described. By using a protection switch in parallel to the low side switch, the low side switch can be maintained in the save operation area during switching. Furthermore, the protection switch allows for a fast discharge of the buck capacitor subsequent to a load transient. The additional protection switch can be integrated within the integrated circuit of the power converter, thereby making the use of external components (e.g. a snapper capacitor) obsolete. Furthermore, the proposed protection switch allows for a protection of the low side switch without additional losses during normal operation of the power converter.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiment outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

## Claims

1. A power converter (400) configured to convert an input voltage (101) at an input of the power converter (400) into an output voltage (107) at an output of the power converter (400), wherein the power converter (400) comprises
- a low side switch (403) configured to couple an inductor (104) to ground during an on-state of the low side switch (403); wherein the inductor (104) is configured to store energy to be provided to a load at the output of the power converter (400); and
- a protection switch (401) in parallel to the low side switch (403), configured to reduce a voltage drop across the low side switch (403) during at least part of a switch off time of the low side switch (403).

2. The power converter (400) of claim 1, wherein the low side switch (403) is an N-channel transistor.

3. The power converter (400) of any previous claim, further comprising a high side switch (402) connectable in series to the inductor (104), configured to couple the inductor (104) to the input voltage (101) or to the output voltage (107) during an on-state of the high side switch (402).

4. The power converter (400) of claim 3, wherein
- the power converter (400) is a buck converter; and
- the high side switch (402) is configured to couple the inductor (104) to the input voltage (101).

5. The power converter (400) of claim 3, wherein
- the power converter (400) is a boost converter; and
- the high side switch (402) is configured to couple the inductor (104) to the output voltage (107).

6. The power converter (400) of any of claims 3 to 5, further comprising a control unit (410, 411, 412) configured to control switching times (511, 512, 513) of the high side switch (402), the low side switch (403) and the protection switch (401).

7. The power converter (400) of claim 6, wherein the control unit (410, 411, 412) is configured to
- switch off the low side switch (403) at a first time instant (511);
- switch off the protection switch (401) at a subsequent second time instant (512).

8. The power converter (400) of claim 7, wherein the time interval between the first (511) and second (512) time instants is greater or equal to the switch off time of the low side switch (403).

9. The power converter (400) of any of claims 7 to 8, wherein the control unit (410, 411, 412) is configured to switch on the high side switch (402) at a third time instant (513) subsequent to the second time instant (512).

10. The power converter (400) of any of claims 7 to 9, wherein the control unit (410, 411, 412) is configured to switch on the protection switch (401) subsequent to switching off the high side switch (402) and not later than switching on the low side switch (403).

11. The power converter (400) of any of claims 6 to 10, wherein the control unit (410, 411, 412) is configured to repeatedly switch between the on- and off-states of the high side switch (402), the low side switch (403) and the protection switch (401) in accordance to a commutation cycle rate of the power converter (400).

12. The power converter (400) of claim 11, wherein the control unit (410, 411, 412) is configured to control the high side switch (402), the low side switch (403) and the protection switch (401) such that
- when the high side switch (402) is in the on-state, the protection switch (401) and the low side switch (403) is in the off-state; and
- when the low side switch (403) is in the on-state, the high side switch (402) is in the off-state.

13. The power converter (400) of any previous claim, wherein the protection switch (403) is a P-channel transistor or a PNP transistor.

14. The power converter (400) of any previous claims, further comprising
- current sensing means configured to sense a current through the low side switch (403); wherein the part of the switch off time of the low side switch (403) during which the protection switch (401) reduces the voltage drop across the low side switch (403) is determined based on the sensed current.

## Amended claims

### Amended claims in accordance with Rule 137(2) EPC.

**1.** A power converter (400) configured to convert an input voltage (101) at an input of the power converter (400) into an output voltage (107) at an output of the power converter (400), wherein the power converter (400) comprises
- a low side switch (403) configured to couple an inductor (104) to ground during an on-state of the low side switch (403); wherein the inductor (104) is configured to store energy to be provided to a load at the output of the power converter (400);
- a protection switch (401) in parallel to the low side switch (403), configured to reduce a voltage drop across the low side switch (403) during at least part of a switch off time of the low side switch (403); and
- a control unit (410, 411, 412) configured to control switching times (511, 512, 513) of the low side switch (403) and the protection switch (401); wherein the control unit (410, 411, 412) is configured to switch off the low side switch (403) at a first time instant (511), and configured to switch off the protection switch (401) at a subsequent second time instant (512); wherein the time interval between the first (511) and second (512) time instants is selected based on the switch off time of the low side switch (403).

**2.** The power converter (400) of claim 1, wherein the low side switch (403) is an N-channel transistor.

**3.** The power converter (400) of any previous claim, further comprising a high side switch (402) connectable in series to the inductor (104), configured to couple the inductor (104) to the input voltage (101) or to the output voltage (107) during an on-state of the high side switch (402).

**4.** The power converter (400) of claim 3, wherein
- the power converter (400) is a buck converter; and
- the high side switch (402) is configured to couple the inductor (104) to the input voltage (101).

**5.** The power converter (400) of claim 3, wherein
- the power converter (400) is a boost converter; and
- the high side switch (402) is configured to couple the inductor (104) to the output voltage (107).

**6.** The power converter (400) of any of claims 3 to 5, wherein the control unit (410, 411, 412) is configured to further control switching times (511, 512, 513) of the high side switch (402).

**7.** The power converter (400) of claim 6, wherein the time interval between the first (511) and second (512) time instants is a fraction of the switch off time of the low side switch (403).

**8.** The power converter (400) of any of claims 6 to 7, wherein the control unit (410,411,412) is configured to switch on the high side switch (402) at a third time instant (513) subsequent to the second time instant (512).

**9.** The power converter (400) of any of claims 6 to 8, wherein the control unit (410, 411, 412) is configured to switch on the protection switch (401) subsequent to switching off the high side switch (402) and not later than switching on the low side switch (403).

**10.** The power converter (400) of any of claims 6 to 9, wherein the control unit (410, 411, 412) is configured to repeatedly switch between the on- and off-states of the high side switch (402), the low side switch (403) and the protection switch (401) in accordance to a commutation cycle rate of the power converter (400).

**11.** The power converter (400) of claim 10, wherein the control unit (410, 411, 412) is configured to control the high side switch (402), the low side switch (403) and the protection switch (401) such that
- when the high side switch (402) is in the on-state, the protection switch (401) and the low side switch (403) is in the off-state; and
- when the low side switch (403) is in the on-state, the high side switch (402) is in the off-state.

**12.** The power converter (400) of any previous claim, wherein the protection switch (403) is a P-channel transistor or a PNP transistor.

**13.** The power converter (400) of any previous claims, further comprising
- current sensing means configured to sense a current through the low side switch (403); wherein the part of the switch off time of the low side switch (403) during which the protection switch (401) reduces the voltage drop across the low side switch (403) is determined based on the sensed current.
